# EUROPEAN PATENT SPECIFICATION

(11) **EP 2 053 106 B1**
(45) Date of publication and mention of the grant of the patent: **27.03.2013**
(21) Application number: 07790498.5
(22) Date of filing: 09.07.2007
(51) Int. Cl.: C09D 13/00, B43K 19/00, B43K 19/02, B43K 19/18

(54) **CRAYON**
WACHSKREIDE
CRAIE

(30) Priority: 12.07.2006 JP 2006191474
(43) Date of publication of application: 29.04.2009
(73) Proprietor: SAKURA COLOR PRODUCTS CORPORATION, Osaka-shi, Osaka 537-0025 (JP)
(72) Inventor: SUMITOMO, Kotaro, Osaka 597-0052 (JP); TAKAHASHI, Masamistu, Shijonawate-shi Osaka 575-0033 (JP); FUKUO, Hidetoshi, Yao-shi Osaka 581-0085 (JP)
(74) Representative: Duckworth, Timothy John
(86) International application number: PCT/JP2007/063677
(87) International publication number: WO 2008/007643

(56) References cited:
- EP-A1- 2 065 450
- JP-A- 52 034 825
- JP-A- 54 081 925
- JP-A- 2002 088 293
- JP-A- 2004 352 741
- JP-A- 2006 057 083
- US-A- 4 193 906

## Description

### Technical Field

The present invention relates to a crayon, i.e., a solid marker, having excellent feel when writing (i.e., leveling properties) while having high gel hardness.

### Background Art

A crayon containing a colorant, an organic solvent, a resin and a gelling agent as main components has been conventionally well known. As an example, a crayon has been well known which is obtained by, for example, dissolving or dispersing dibenzylidene sorbitol, tribenzylidene sorbitol or derivatives thereof as a gelling agent, a resin component and a colorant in an organic solvent, and cooling and solidifying the resulting solution (Patent Literature 1).

In relation to such a crayon, a crayon containing polyvinyl butyral resin as a resin component has been proposed because it has necessary hardness and it provides writing composed of strong film (Patent Literatures 2 and 3).

In general, when such a benzylidene sorbitol compound mentioned above is used as a gelling agent, a crayon is produced as follows. A colorant and a resin component are dispersed and dissolved in an organic solvent under heating, a gelling agent is dissolved in the resultant, the obtained raw material solution is poured into a molding container, and cooled and solidified, thereby providing a crayon having a desired shape. In this case, when the viscosity of the raw material solution is excessively high, it is difficult to pour the raw material solution into the molding container. Accordingly, as a resin component, there are no other choices than using a resin having a relatively low molecular weight until now, including the case where the polyvinyl butyral resin is used. However, when a resin component having a low molecular weight is used, a crayon obtained has low gel hardness and is easy to collapse in writing, resulting in poor feel when writing.
Patent Literature 1: Japanese Patent Publication No. 54-23619
Patent Literature 2: Japanese Patent Publication No. 55-41716
Patent Literature 3: Japanese Unexamined Patent Publication No. 2006-57083

A crayon comprising a colorant, a gelting agent, an organic solvent and a resin component comprising a polyvinyl butyral resin is also known from US-4193906-A.

### Disclosure of the Invention

### Technical Problems to be Solved

The invention has been made to solve the above-described problems involved in the crayon containing the benzylidene sorbitol gelling agent. Therefore, it is an object of the invention to provide a crayon having excellent feel when writing (leveling properties) while having high gel hardness.

### Means to Solve the Problems

The invention provides a crayon comprising a colorant, a gelling agent, an organic solvent and a resin, wherein the gelling agent is at least one selected from the group consisting of dibenzylidene sorbitol, tribenzylidene sorbitol and derivatives thereof, and the resin comprises a combination of polyvinyl butyral resin having an average degree of polymerization of less than 350 and polyvinyl butyral resin having an average degree of polymerization of 350 or more, wherein the amount of the polyvinyl butyral resin having an average degree of polymerization of less than 350 is in the range of from 20 to 95% by weight and the amount of the polyvinyl butyral resin having an average degree of polymerization of 350 or more is in the range of from 5 to 80% by weight, each based on the weight of the combination of the polyvinyl butyral resins.

### Effect of the Invention

The crayon of the invention is excellent in feel when writing while it has high gel hardness because the crayon comprises a benzylidene sorbitol compound as a gelling agent as well as a combination of polyvinyl butyral resin having an average degree of polymerization of less than 350 and polyvinyl butyral resin having an average degree of polymerization of 350 or more as a resin component, wherein the amount of the polyvinyl butyral resin having an average degree of polymerization of less than 350 is in the range of from 20 to 95% by weight and the amount of the polyvinyl butyral resin having an average degree of polymerization of 350 or more is in the range of from 5 to 80% by weight, each based on the weight of the combination of the polyvinyl butyral resins.

### Best Mode for Carrying Out the Invention

The crayon of the invention comprises a colorant, a gelling agent, an organic solvent and a resin, wherein at least one selected from the group consisting of dibenzylidene sorbitol, tribenzylidene sorbitol and derivatives thereof is used as the gelling agent, and a combination of polyvinyl butyral resin having an average degree of polymerization of less than 350 and polyvinyl butyral resin having an average degree of polymerization of 350 or more is used as the resin, wherein the amount of the polyvinyl butyral resin having an average degree of polymerization of less than 350 is in the range of from 20 to 95% by weight and the amount of the polyvinyl butyral resin having an average degree of polymerization of 350 or more is in the range of from 5 to 80% by weight, each based on the weight of the combination of the polyvinyl butyral resins.

The organic solvent used in the crayon of the invention is not particularly limited, and at least one selected from the group consisting of alcohols, glycols, glycol ethers, and glycol ether esters is preferably used. Specific examples of such a preferable organic solvent include: alcohols, such as methanol, ethanol, isopropyl alcohol, 3-methyl-3-methoxybutanol, and 3-methoxy-1-butanol; glycols, such as ethylene glycol, propylene glycol, diethylene glycol, and dipropylene glycol; glycol ethers, such as methyl ether, ethyl ether, propyl ether, butyl ether, and phenyl ether of the above-mentioned glycols; and glycol ether esters, such as acetate of the above-mentioned glycol ethers.

Among the above, at least one selected from the group consisting of 3-methyl-3-methoxybutanol, ethylene glycol monobutyl ether, propylene glycol monomethyl ether, propylene glycol monopropyl ether, propylene glycol monobutyl ether, and dipropylene glycol monomethyl ether is particularly preferably used.

The amount of the organic solvent in the crayon of the invention is suitably determined depending on the other components, such as a colorant. The amount of the organic solvent is usually in the range of from 20 to 80% by weight, and preferably 30 to 65% by weight, based on the weight of crayon. When the amount of the organic solvent is excessively large, there is a possibility that it becomes difficult to integrally gel the necessary components in producing the crayon. On the other hand, when the amount of the organic solvent is excessively small, it becomes difficult to dissolve the necessary components therein in producing the crayon, resulting in a possibility that a uniform gel cannot be formed.

The gelling agent is a component for integrating the components into a solid. As such a gelling agent, at least one selected from the group consisting of dibenzylidene sorbitol, tribenzylidene sorbitol and derivatives thereof is preferably used.

Examples of derivatives of dibenzylidene sorbitol include compounds in which a benzene nucleus in a benzylidene group of dibenzylidene sorbitol is substituted with an alkyl group having 1 to 3 carbon atoms or a halogen atom at an arbitrary position. Specific examples thereof include [di(p-methyl benzylidene)]sorbitol, [di(m-ethyl benzylidene)]sorbitol, and [di(p-chlorobenzylidene)]sorbitol.

Examples of derivatives of tribenzylidene sorbitol include compounds in which a benzene nucleus in a benzylidene group of tribenzylidene sorbitol is substituted with an alkyl group having 1 to 3 carbon atoms or a halogen atom at an arbitrary position. Specific examples thereof include [tri(p-methyl benzylidene)]sorbitol, [tri(m-ethyl benzylidene)]sorbitol, and [tri(p-chlorobenzylidene)]sorbitol. The gelling agents can be used singly or in combination of two or more.

The amount of the gelling agent is usually in the range of from 2 to 20% by weight, and preferably from 3 to 10% by weight, based on the weight of crayon. It is not preferable to use an excessively large amount of the gelling agent because the gel hardness of the crayon obtained is too high, and thus the resulting crayon has reduced colorability when writing. On the other hand, when the amount of the gelling agent is excessively small, it becomes difficult to integrally gel the components in the production of crayon.

The crayon comprises a colorant so that it can form writing having various colors on a writing surface. As a colorant, a dye is also used, and a pigment is preferably used. Such a pigment may be an organic pigment or an inorganic pigment. Examples of a pigment used include phthalocyanine pigment such as copper phthalocyanine blue, an indanthrene pigment, an azo pigment, a quinacridone pigment, an anthraquinone pigment, a dioxazine pigment, an indigo pigment, a thioindigo pigment, a perinone pigment, a perylene pigment, an indolenone pigment, and an azo-azomethine pigment, and, in addition thereto, titanium oxide and carbon black. Furthermore, as required, an inorganic pigment, such as iron oxide, red iron oxide, chrome oxide, calcium carbonate, clay, and talc, a fluorescent pigment, colored resin particles, a metallic flake pigment, such as aluminum powder, a so-called pearl pigment, etc., are used. Moreover, various extender pigments are also used as required. However, the colorant used is not limited to the above.

The amount of the colorant contained in the crayon is generally in the range of from 2 to 50% by weight based on the weight of crayon. When the amount of the colorant in the crayon is less than 2% by weight, the crayon obtained makes no sufficient color development. However, when the amount of colorant exceeds 50% by weight, the relative proportions of the other components other than the colorant are excessively low in the crayon obtained, and thus the functions of the components are not fully demonstrated, thereby failing to provide the crayon of the invention excellent in performance. Moreover, in the production of crayon, the viscosity of the raw material solution mentioned hereinbefore is excessively high, which makes it difficult to pour the solution into a molding container. The optimum amount of colorant in the crayon varies depending on the type of colorant used, and is usually in the range of from 3 to 40% by weight.

In general, the resin component has a function of integrating the components when the crayon is produced, and also a function as a fixing agent for writing formed when writing is performed on a writing surface with the crayon obtained. According to the invention, a combination of a film forming resin and an adhesive resin is preferably used as the resin component. As required, the film forming resin may be used singly.

The film forming resin is intended to increase hardness of the crayon of the invention and strengthen writing formed therewith on a writing surface. According to the invention, as the film forming resin, polyvinyl butyral resin is used because polyvinyl butyral resin is excellent in pigment dispersibility and imparts moderate hardness and desirable feel when writing to the crayon obtained. In particular, a combination of polyvinyl butyral resin having an average degree of polymerization of less than 350 and polyvinyl butyral resin having an average degree of polymerization of 350 or more is used. Based on the combination of the resins, the proportion of polyvinyl butyral resin having an average degree of polymerization of less than 350 is from 20 to 95% by weight, preferably from 40 to 80% by weight, and most preferably from 50 to 75% by weight. The proportion of polyvinyl butyral resin having an average degree of polymerization of 350 or more is from 5 to 80% by weight, preferably from 20 to 60% by weight, and most preferably from 25 to 50% by weight.

When the proportion of polyvinyl butyral resin having an average degree of polymerization of less than 350 exceeds 95% by weight, the hardness of crayon obtained is excessively low, and thus the crayon obtained is easy to collapse when writing, resulting in poor feel when writing. On the other hand, when the proportion of polyvinyl butyral resin having an average degree of polymerization of 350 or more exceeds 80% by weight, the hardness of crayon obtained is excessively high, and thus writing is sticky to a writing surface when writing, resulting in poor feel when writing.

The adhesive resin is intended to increase adhesion of writing formed with the crayon to a writing surface, and is not particularly limited insofar as such functions are given. In usual, ketone resin, xylene resin, polyamide resin, acrylic resin, maleic resin, terpene phenolic resin, alkylphenolic resin, and the like, are generally used. Furthermore, rosin ester and hydrogenated rosin ester are also used similarly as the adhesive resin. Examples of ketone resin include a condensate of cyclohexane and formaldehyde. Examples of xylene resin include a condensate of metaxylene and formaldehyde. Examples of polyamide resin is a thermoplastic resin obtained by condensation polymerization of dimer acid and diamine or polyamine and having a molecular weight of about 4,000 to 9,000. Examples of an acrylic resin include thermoplastic polyacrylic acid ester. These adhesive resins may also be used singly or in combination of two or more.

When the above-mentioned combination of film forming resin and adhesive resin is used, the ratio of the film forming resin and the adhesive resin is suitably determined depending on the other components. The weight ratio of the film forming resin : the adhesive resin is usually about 1:0.1 to 5, and preferably about 1:0.2 to 3.

The amount of the film forming resin and the adhesive resin in all is usually from 3 to 40% by weight, and preferably from 6 to 35% by weight, based on the weight of crayon. When the amount of the resins in all is excessively high, the gel hardness of crayon obtained is excessively high, and colorability and feel when writing are poor. In contrast, when the amount of the resins in all is excessively low, it becomes difficult to integrally gel the components and the crayon obtained has no sufficient fixability and strength.

The crayon according to the invention may suitably contain, as required, in addition to the above-mentioned components, other components which are conventionally known as additives in a crayon, such as an anticorrosive agent, a filler, a leveling agent, a viscosity controlling agent, a structural viscosity imparting agent, and a dryness imparting agent. Moreover, plasticizers, such as diethyl phthalate, dibutyl phthalate, dioctyl phthalate, 2-ethylhexyl epoxy hexahydrophthalate, 2-ethylhexyl sebacate, and tricresyl phosphate may also be suitably contained.

The gel hardness of the crayon of the invention varies depending on the type and proportion of the organic solvent, gelling agent, resin, and the like used and is usually about 5 to 50 kg/cm², and preferably from 7 to 30 kg/cm².

The crayon of the invention is not limited at all in the process of production. Basically, the crayon of the invention can be obtained by uniformly mixing the above-mentioned components to integrally form a gel. As an example, the combination of the polyvinyl butyral resins is added to and dissolved in the organic solvent, the colorant is added to the obtained solution and is fully dispersed with a mill or the like, the gelling agent is added to the solution under heating as required and is dissolved, the uniform raw material solution thus obtained is poured into a molding container having a desired shape, and the resultant is cooled and solidified, thereby the crayon of the invention having the desired shape can be obtained.

### Examples

The invention will be described with reference to the following examples and comparative examples, but the invention is not limited thereto.

### Example 1

4.0 parts by weight of dibutyl phthalate, 10.0 parts by weight of polyvinyl butyral resin having an average degree of polymerization of about 250 (MOWITAL B-18S, manufactured by Kuraray Co., Ltd., the same hereinafter), and 10.0 parts by weight of polyvinyl butyral resin having an average degree of polymerization of about 500 (MOWITAL B-30H, manufactured by Kuraray Co., Ltd., the same hereinafter) were added to and dissolved in a mixed solvent composed of 2.7 parts by weight of ethylene glycol monobutyl ether, 5.0 parts by weight of propylene glycol n-butyl ether and 30.0 parts by weight of dipropylene glycol monomethyl ether.

17.5 parts by weight of titanium oxide was added to and fully dispersed in the obtained solution using a mill. The resultant was heated to a temperature of 130°C, and 5.3 parts by weight of ketone resin ("Highlack 111" manufactured by Hitachi Chemical Company., Ltd.) and 9.0 parts by weight of polyamide resin (Versamide 335, manufactured by Henkel Hakusui Corporation) were added thereto and dissolved therein with stirring. Subsequently, 6.5 parts by weight of dibenzylidene sorbitol ("GELOL D", a gelling agent manufactured by New Japan Chemical Co., Ltd.) was added to the solution at the same temperature as mentioned above and completely dissolved. The raw material solution thus obtained was poured into a cylindrical molding container, and cooled and solidified. Then, the solidified substance was taken out as a crayon from the container.

### Examples 2 to 6

Crayons were obtained in the same manner as in Example 1, except using the components shown in Table 1 in the amounts shown in Table 1. It should be noted that the polyvinyl butyral resin having an average degree of polymerization of about 300 use is MOWITAL B-20H manufactured by Kuraray Co., Ltd.

### Comparative Examples 1 to 4

Crayons were obtained in the same manner as in Example 1, except using the components shown in Table 1 in the amounts shown in Table 1.

Writing was performed on an aluminum plate using each crayon obtained as described above, and then gel hardness and writing properties of the crayons were evaluated. The gel hardness of the crayons was evaluated as follows. The case where the crayon had desirable hardness in writing was defined as A, the case where the crayon was somewhat hard or somewhat soft was defined as B, and the case where the crayon was excessively hard or soft was defined as C. The writing properties of the crayons were evaluated as follows. The case where feel when writing was good was defined as A, the case where the crayon was somewhat easy to collapse or somewhat sticky to a writing surface in writing was defined as B, and the case where the crayon was easy to collapse or sticky to a writing surface in writing was defined as C. The results are shown in Table 1.

**TABLE 1**

| | | | Examples | | | | | | | Comparative | | |
|---|---|---|---|---|---|---|---|---|---|---|---|---|
| | | | 1 | 2 | 3 | 4 | 5 | 6 | 1 | 2 | 3 | 4 |
| Solvent | | | | | | | | | | | | |
| | Butyl cellosolve | | 2.7 | 13.8 | 10.6 | 12.0 | 12.0 | 12.0 | 12.0 | 12.0 | 12.0 | 12.0 |
| | Propylene glycol mono-n-butyl ether | | 5.0 | 17.4 | 12.4 | 18.0 | 18.0 | 18.0 | 18.0 | 18.0 | 18.0 | 18.0 |
| | Dipropylene glycol monomethyl ether | | 30.0 | 8.5 | 19.1 | 8.7 | 8.7 | 8.7 | 8.7 | 8.7 | 8.7 | 8.7 |
| Colorant | | | | | | | | | | | | |
| | Titanium dioxide | | 17.5 | 17.0 | 17.4 | 18.0 | 18.0 | 18.0 | 18.0 | 18.0 | 18.0 | 18.0 |
| Resin Component | | | | | | | | | | | | |
| | Polyvinyl butyral resin | | | | | | | | | | | |
| | | Average degree of polymerization: about 250 | 10.0 | | 7.0 | | | | 20.0 | | | |
| | | Average degree of polymerization: about 300 | | 13.0 | 7.0 | 19.0 | 15.0 | 5.0 | | 20.0 | | 1.0 |
| | | Average degree of polymerization: about 500 | 10.0 | 8.0 | 7.0 | 1.0 | 5.0 | 15.0 | | | 20.0 | 19.0 |
| | Ketone resin | | 5.3 | 4.8 | 4.5 | 5.0 | 5.0 | 5.0 | 5.0 | 5.0 | 5.0 | 5.0 |
| | Polyamide resin | | 9.0 | 9.0 | 8.5 | 8.8 | 8.8 | 8.8 | 8.8 | 8.8 | 8.8 | 8.8 |
| Gelling Agent | | | 6.5 | 6.5 | 6.5 | 6.5 | 6.5 | 6.5 | 6.5 | 6.5 | 6.5 | 6.5 |
| Plasticizer | | | 4.0 | 2.0 | | 3.0 | 3.0 | 3.0 | 3.0 | 3.0 | 3.0 | 3.0 |
| Properties of Crayon | | | | | | | | | | | | |
| | Gel hardness | | A | A | A | A~B | A | A | C | C | A | A |
| | Feel when writing | | A | A | A | A~B | A | A~B | C | C | C | C |

## Claims

1. A crayon, comprising a colorant, a gelling agent, an organic solvent, and a resin component,
wherein the gelling agent is at least one selected from dibenzylidene sorbitol, tribenzylidene sorbitol and derivatives thereof, and
the resin component comprises a combination of polyvinyl butyral resin having an average degree of polymerization of less than 350 and polyvinyl butyral resin having an average degree of polymerization of 350 or more as a film forming resin, wherein the amount of the polyvinyl butyral resin having an average degree of polymerization of less than 350 is in the range of from 20 to 95% by weight and the amount of the polyvinyl butyral resin having an average degree of polymerization of 350 or more is in the range of from 5 to 80% by weight, each based on the weight of the combination of the polyvinyl butyral resins.

2. A crayon according to claim 1, wherein the resin component comprises a combination of a film forming resin and an adhesive resin, wherein the adhesive resin is at least one selected from ketone resin, xylene resin, polyamide resin, acrylic resin, maleic resin, terpene phenolic resin, and alkylphenolic resin.

3. A crayon according to claim 2, wherein the weight ratio of the film forming resin : the adhesive resin is in the range of 1:0.1 to 5.

4. A crayon according to claim 2 or claim 3, wherein the amount of the film forming resin and the adhesive resin in all is in the range of from 3 to 40% by weight based on the weight of crayon.

5. A crayon according to any one of the preceding claims, wherein the organic solvent is at least one selected from ethylene glycol monobutyl ether, propylene glycol monopropyl ether, propylene glycol monobutyl ether, dipropylene glycol monomethyl ether, and 3-methyl-3-methoxybutanol.

## Patentansprüche

1. Kreide, die eine färbende Substanz, ein Geliermittel, ein organisches Lösungsmittel und eine Harzkomponente umfasst, wobei das Geliermittel wenigstens eins ist, das aus Dibenzylidensorbit, Tribenzylidensorbit und Derivaten davon ausgewählt ist, und die Harzkomponente eine Kombination aus Polyvinylbutyralharz, das einen durchschnittlichen Polymerisationsgrad von weniger als 350 hat, und Polyvinylbutyralharz, das einen durchschnittlichen Polymerisationsgrad von 350 oder mehr hat, als filmbildendes Harz umfasst, wobei die Menge des Polyvinylbutyralharzes, das einen durchschnittlichen Polymerisationsgrad von weniger als 350 hat, im Bereich von 20 bis 95 Gew.-% liegt, und die Menge des Polyvinylbutyralharzes, das einen durchschnittlichen Polymerisationsgrad von 350 oder mehr hat, im Bereich von 5 bis 80 Gew.-% liegt, jeweils auf der Basis des Gewichtes der Kombination der Polyvinylbutyralharze.

2. Kreide gemäß Anspruch 1, wobei die Harzkomponente eine Kombination aus einem filmbildenden Harz und einem Klebeharz umfasst, wobei das Klebeharz wenigstens eines ist, das aus Ketonharz, Xylolharz, Polyamidharz, Acrylharz, Maleinharz, Terpen-Phenol-Harz und Alkylphenolharz ausgewählt ist.

3. Kreide gemäß Anspruch 2, wobei das Gewichtsverhältnis filmbildendes Harz:Klebeharz im Bereich von 1:0,1 bis 5 liegt.

4. Kreide gemäß Anspruch 2 oder Anspruch 3, wobei die Menge des filmbildenden Harzes und des Klebeharzes insgesamt im Bereich von 3 bis 40 Gew.-%, bezogen auf das Kreidegewicht, liegt.

5. Kreide gemäß einem der vorangehenden Ansprüche, wobei das organische Lösungsmittel wenigstens eins ist, das aus Ethylenglykolmonobutylether, Propylenglykolmonopropylether, Propylenglykolmonobutylether, Dipropylenglykolmonomethylether und 3-Methyl-3-methoxybutanol ausgewählt ist.

## Revendications

1. Crayon comprenant un colorant, un agent gélifiant, un solvant organique et un composant de type résine, dans lequel
- l'agent gélifiant est choisi, au nombre d'au moins un, parmi les dibenzylidène-sorbitol et tribenzylidène-sorbitol et leurs dérivés,
- et le composant de type résine comprend, en tant que résine filmogène, une combinaison d'une résine de poly(butyral de vinyle) présentant un degré moyen de polymérisation inférieur à 350 et d'une résine de poly(butyral de vinyle) présentant un degré moyen de polymérisation supérieur ou égal à 350, dans laquelle combinaison la proportion de la résine de poly(butyral de vinyle) présentant un degré moyen de polymérisation inférieur à 350 vaut de 20 à 95 % en poids et la proportion de la résine de poly(butyral de vinyle) présentant un degré moyen de polymérisation supérieur ou égal à 350 vaut de 5 à 80 % en poids, dans chaque cas par rapport au poids total de la combinaison de ces résines de poly(butyral de vinyle).

2. Crayon conforme à la revendication 1, dans lequel le composant de type résine comprend une combinaison d'une résine filmogène et d'une résine adhésive, laquelle résine adhésive est choisie, au nombre d'au moins une, parmi une résine de cétone, une résine de xylène, une résine de polyamide, une résine acrylique, une résine maléique, une résine terpényl-phénolique, et une résine alkyl-phénolique.

3. Crayon conforme à la revendication 2, dans lequel le rapport pondéral de la résine filmogène à la résine adhésive vaut de 1/0,1 à 1/5.

4. Crayon conforme à la revendication 2 ou 3, dans lequel le total des proportions de la résine filmogène et de la résine adhésive vaut de 3 à 40 %, en poids rapporté au poids du crayon.

5. Crayon conforme à l'une des revendications précédentes, dans lequel le solvant organique est choisi, au nombre d'au moins un, parmi l'éther monobutylique d'éthylèneglycol, l'éther monopropylique de propylèneglycol, l'éther monobutylique de propylèneglycol, l'éther mono-méthylique de dipropylèneglycol, et le 3-méthyl-3-méthoxy-butanol.
